(19) Europäisches Patentamt
European Patent Office
Office européen des brevets

(11) Publication number: **0 264 834**
**B1**

(12) # EUROPEAN PATENT SPECIFICATION

(45) Date of publication of patent specification: **23.01.91**

(51) Int. Cl.$^5$: **C 25 D 15/00,** C 25 D 13/06, C 09 D 5/44

(21) Application number: **87115100.7**

(22) Date of filing: **15.10.87**

(54) **Electrodeposition coating composition.**

(30) Priority: **16.10.86 JP 246770/86**
**16.10.86 JP 246771/86**

(43) Date of publication of application:
**27.04.88 Bulletin 88/17**

(45) Publication of the grant of the patent:
**23.01.91 Bulletin 91/04**

(84) Designated Contracting States:
**DE FR GB IT**

(56) References cited:
**US-A-4 259 163**

(73) Proprietor: **Nippon Paint Co., Ltd.**
**2-1-2, Oyodokita Oyodo-ku**
**Osaka-shi Osaka-fu (JP)**

(72) Inventor: **Tsuchiya, Yasuyuki**
**3-8-23 Kuzuha Asahi**
**Hirakata-shi Osaka-fu (JP)**
Inventor: **Nishikawa, Shigeo**
**384-2 Taimacho Ohta Kitakatsuragigun**
**Nara-ken (JP)**
Inventor: **Tobinaga, Kenshiro**
**2-32-5 Yuyamadai**
**Kawanishi-shi Hyogo-ken (JP)**
Inventor: **Muramoto, Hisaichi**
**2-A6-304 Korigaoka**
**Hirakata-shi Osaka-fu (JP)**

(74) Representative: **Kinzebach, Werner, Dr.**
**Patentanwälte Reitstötter, Kinzebach und Partner Sternwartstrasse 4 Postfach 86 06 49**
**D-8000 München 86 (DE)**

**EP 0 264 834 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

Electrodeposition coating processes have been a wide use for applying anti-corrosive primer coatings to various metallic substrates such as automobile bodies because they are applicable to a variety of substrates regardless of shape and configuration and also hazardless to attendant workers and to the environment. Coating compositions used in the electrodeposition processes are in the form of an aqueous solution or dispersion of electrically charged film-forming resins.

As one type of such film-forming resins usable in the electrodeposition coating, those resins which cure through an oxidation-polymerization reaction are known such as natural or synthetic drying oil based- or liquid polybutadiene based resins. These resins, whether anodic or cathodic, require the use of a curing catalyst for promoting the polymerization reaction at relatively low baking temperatures. Catalysts which may be used for such purpose are various metallic compounds that function similar to metal dryers in conventional oil based paints. Heretofore, these metal compounds have been conventionally used in the form of a water-soluble or oil-soluble salt or oxide. However, some difficulties have often been experienced in uniformly dispersing these metal compounds in a coating bath containing a hydrophilic film-forming resin and transferring into electrically deposited films. As a result, the coating films do not cure satisfactorily at relatively low baking temperatures. Furthermore, electrolytic metal salts such as acetates or other water-soluble salts cannot be used in anodic electrodeposition coating compositions because metal ions will migrate toward counter electrode away from the substrate to be coated.

The presence of curing catalysts is extraneous for finished coating films after films have been fully cured. Therefore, the catalyst remaining in the cured film in a releasable form may often deteriorate film characteristics due to migration or bleeding.

Similar problems may be encountered in cathodic electrodeposition coating compositions comprising a hydrophilic base resin containing active hydrogen atoms and a block polyisocyanate compound. Such coating systems require a curing catalyst such as tertiary amines or organic tin compounds added thereto for promoting the urethanizing reaction of the base resin with the blocked polyisocyanate. The catalyst is conventionally used in the form of a pigment or liquid which is often difficult to disperse uniformly in the coating system. The catalyst in this form is not fully taken up into deposited films and has an adverse effect on the films after curing.

Summary of the Invention

It is, therefore, a principal object of the present invention to provide an electrodeposition coating composition containing a curing catalyst which may be uniformly dispersible in the composition to a stable state, certainly taken up into deposited films and has no adverse effect on film characteristics after the films have been cured by the action of the catalyst. Other object and advantages of the present invention will become apparent to those skilled in the art as the description proceeds.

According to the present invention, there is provided an electrodeposition coating composition comprising (a) an aqueous dispersion of an electrically depositable, film-forming base resin selected from the group consisting of an oxidation-polymerizing resin and a combination of an active hydrogen-containing resin and a blocked polyisocyanate compound; and (b) polymer microparticles carrying on their surfaces a catalytically effective amount of a metal compound of a tertiary amine capable of catalyzing the curing reaction of said resin, said polymer microparticles being uniformly dispersed in said aqueous dispersion of said film-forming resin.

Metals capable of catalyzing the curing reaction of the oxidation-polymerizing resins include Mn, Co, Cu, Fe, Pb, Zn, Zr, Li, Mg, Al, Ba, Sr, Ni, Ca, Na, K and Sn. Metals capable of catalyzing the urethanizing reaction of the active hydrogen-containing resin and the blocked polyisocyanate compound include Sn, Bi, Ti or Ca. Tertiary amines may be used in catalyzing the urethanizing reaction.

These catalysts may be bound to the surfaces of the polymer microparticles either physically or chemically.

The polymer microparticles themselves may eventually form a part of film-forming components. It is for this reason that the catalyst component may be uniformly dispersible in the base film-forming resin in stable manner and certainly taken up in the electrically deposited films of the base resin. Since the catalyst can perform its catalyzing function in this form but eventually immobilized in the cured film, the curing reaction of the base resin may be greatly promoted without any adverse affect on the quality of finished coating.

Detailed Discussion

Film-forming Base Resins

This invention is applicable to both anodic and cathodic electrodeposition coating compositions containing oxidation polymerizing base resins. Base resins usable in the electrodeposition coating process generally have a functional group capable of providing electrical charges and hydrophilicity to the base resins. Depending upon their dispersed state, they may be classified into the solution type, dispersion type, emulsion type and suspension type. These types of resins are collectively referred to herein as "water-dispersible resins".

Water-dispersible oxidation polymerizing resins used in the anodic electrodeposition coating must have a negatively chargeable hydrophilic group such as carboxyl group and also a plurality of oxidation polymerizable carbon-to-carbon double bonds. Typical examples of such resins include maleinized natural or synthetic drying oils, maleinized polybutadiene and dicarboxylic acids, half esters and half amides derived from maleinized oils and polybutadiene by the ring opening reaction with water, alcohols, ammonia and primary or secondary amines.

Water-dispersible oxidation polymerizing resins used in the cathodic electrodeposition coating must have a positively chargeable hydrophilic group such as amino group and also a plurality of oxidation polymerizable carbon-to-carbon double bonds. Typically these resins are prepared by reacting epoxidized liquid polybutadiene with a primary or secondary amine. Cathodic electrodeposition coating compositions containing this type of base resins are disclosed in Japanese Laid Open Patent Application (Kokai) Nos. 90273/1985, 90274/1985, 219271/1985, 219272/1985, 229967/1985 and 229968/1985, jointly assigned to the assignee of this application.

In order to enhance various film properties, the water-dispersible oxidation polymerization resins are used in the form of an emulsion in combination with a resin free from chargeable hydrophilic groups such as epoxy acrylate resin. Also, these base resins are often used in conjuction with an auxiliary cross-linking agent such as blocked polyisocyanate compounds, melamine resins or polyester resins. The term "oxidation polymerizing resins" as used herein includes mixtures with such non-hydrophilic resins and/or auxiliary cross-linkers. Further details of the water-dispersible, oxidation polymerizing resins are well-known in the art and need not to explain.

Water-dispersible urethane resins usuable in the cathodic electrodeposition are film-forming polymers or oligomers having a positively chargeable hydrophilic group such as amino group and a plurality of active hydrogen atoms. The polymers of oligomers may be acrylic/vinyl copolymers, polyesters, polyamides, epoxy polymers or blends of these polymers. Cathionic amino groups and active hydrogen atoms may be introduced into the polymer backbone by copolymerizing an active hydrogen-containing monomer and an amino group-container monomer, or by modifying terminal functional groups such as carboxy, amino, hydroxy or epoxy group appropriately.

Organic polyisocyanate compounds used for crosslinking the base resins must be fully blocked so that they do not react with water or organic solvents present in the coating composition. However, they must be capable of regenerating free isocyanate function at an elevated temperature when deposited films are cured. A number of coating systems of this type are known and the present invention may be applicable to any known system. Further details are well-known in the art and need not to explain.

Polymer Microparticles

Several methods are known for preparing the polymer microparticles. One method includes the steps of emulsion or suspension polymerizing a mixture of ethylenically unsaturated monomers in an aqueous medium, and removing water from the emulsion by means of solvent substitution, azeotropic distillation, centrifugation, drying and the like.

Another method commonly referred to as the non-aqueous dispersion (NAD) method or precipitation polymerization method comprises polymerizing a mixture of ethylenically unsaturated monomers in a non-aqueous organic liquid such as aliphatic hydrocarbons having low solubility parameters or those solvents having high solubility parameters in which the monomer mixture is soluble but the polymer is insoluble to form a non-aqueous dispersion of the polymeric microparticles.

The polymeric microparticles used in the present invention may be prepared by any of these known methods.

The starting monomer mixture may contain, at least as a portion thereof, a monomer having at least two polymerizable sites per molecule or a combination of two monomers having mutually reactive groups to give microparticles which are internally cross-linked.

Examples of ethylenically unsturated comonomers used for the production of microparticles include methyl (meth)acrylate, ethyl (meth)acrylate, n-butyl (meth)acrylate, isobuty (meth)acrylate, 2-ethylhexyl (meth)acrylate, styrene, α-methylstyrene, vinyltoluene, t-butylstyrene, ethylene, propylene, vinyl acetate, vinyl propionate, acrylonitrile, methacrylonitrile, dimethylaminoethyl (meth)acrylate and the like. Two or more comonomers may be combined.

Cross-linking comonomers include a monomer having at least two ethylenically unsaturated bonds per molecule and the combination of two different monomers having mutually reactive groups.

Monomers having at least two polymerization sites may typically be represented by esters of a polyhydric alcohol with an ethylenically unsaturated monocarboxylic acid, esters of an ethylenically unsaturated monocarboxylic acid, esters of an ethylenically unsaturated monoalcohol with a polycarboxylic acid and aromatic compounds having at least two vinyl substituents. Specific examples thereof include ethylene glycol diacrylate, ethylene glycol dimethacrylate, triethylene glycol dimethacrylate, tetraethylene glycol dimethacrylate, 1,3-butylene glycol dimethacrylate, trimethylolpropane triacrylate, trimethylolpropane trimethacrylate, 1,4-butanediol diacrylate, neopentyl glycol diacrylate, 1,6-hexanediol diacrylate, pentaerythritol diacrylate, pentaerythritol triacrylate, pentaerythritol tetracrylate, pentaerythritol dimethacrylate, pentaerythritol trimethacrylate, pentaerythritol tetramethacrylate, glycerol diacrylate, glycerol allyloxy dimethacrylate, 1,1,1-tris(hydroxymethyl)ethane diacrylate,

1,1,1-tris(hydroxymethyl)ethane triacrylate, 1,1,1-tris(hydroxymethyl)ethane dimethacrylate, 1,1,1-tris-(hydroxymethyl)ethane trimethyacrylate, 1,1,1-tris(hydroxymethyl)propane diacrylate, 1,1,1-tris(hydroxymethyl)propane triacrylate, 1,1,1-tris(hydroxymethyl)propane dimethacrylate, 1,1,1-tris(hydroxymethyl)-propane trimethacrylate, triallyl cyanurate, triallyl isocyanurate, triallyl trimellitate, diallyl phthalate, diallyl terephthalate and divinyl benzene.

Combinations of two monomers having mutually reactive groups may be used in place of, or in addition to monomers having two or more polymerization sites. For example, monomers having a glycidyl group such as glycidyl acrylate or methacrylate may be combined with carboxyl group-containing monomers such as acrylic, methacrylic or crotonic acid. Also, hydroxyl group-containing monomers such as 2-hydroxyethyl (meth)acrylate, 2-hydroxypropyl (meth)acrylate, hydroxybutyl (meth)acrylate, allyl alcohol or methallyl alcohol may be combined with isocyanato group-containing monomers such as vinyl isocyanate or isopropenyl isocyanate.

Polymer microparticle prepared from the combination of two monomers having mutually reactive groups are recovered by such conventional means as filtration, spray drying or lyophilization and then subjected to internally crosslinking by heating them optionally in the presence of a catalyst.

Polymer microparticles in an aqueous or nonaqueous medium may be isolated in a similar manner and used directly without heating or after milling to a suitable particle size. Alternatively, the dispersion containing the polymer microparticles may be subjected to solvent substitution and the resulting suspension in a new medium may be incorporated in the composition of this invention.

The average size or diameter of the polymer microparticles may be controlled by selecting an appropriate polymerization method. The emulsion polymerization and NAD method are suited for 0.01 to 0.6 micron (μm) range while the precipitation polymerization method is suited for 0.2 to 20 micron (μm) range.

It is preferable for the polymer microparticles used in the present invention to bear on their surfaces ionic groups having the same polarity as that of the base resin to be combined i.e. an anionic group such as carboxylic or sulfonic acid group for anodic electrodeposition and a cathionic group such as amino group for cathodic electrodeposition. This may be effected by incorporating a monomer having both ethylenic unsaturation and carboxyl group such as acrylic or methacrylic acid, or a monomer having both ethylenic unsaturation and a basic group such as dimethylaminoethyl (meth)acrylate or vinylpyridines to the monomer mixture constituting the polymer microparticles. Alternatively, the anionic or cathionic group may be given to the polymer microparticles by using a polymerization initiator which gives the acid or base terminal when polymerizing the monomer mixture.

The polymer microparticles having ionic groups may also be prepared by emulsion polymerizing monomer mixtures having no ionic group in the presence of an emulsifier having ionic groups, particularly amphoionic groups such as oligosoaps, polysoaps or reactive emulsifiers disclosed in Japanese Laid Open Patent Applications 56—24461, 57—21927 and 57—50522.

The polymer microparticles may also be prepared by polymerizing a mixture of ethylenically unsaturated monomers using the solution- or bulk polymerization technique, pulverizing the resulting polymer mass into microparticles and classifying or sieving the microparticles.

Polymer microparticles of thermosetting resins such as epoxy, melamine or alkyd resin may be prepared by emulsifying a liquid of said resin in an aqueous medium and then spray drying. Alternatively, a solid mass of said resin may be pulverized and sieved into miroparticles of a suitable particle size range.

Methods for binding catalyst components to polymer microparticles

One method for binding a catalyst on the surfaces of polymer microparticles comprises physically absorbing or adsorbing the catalyst to the polymer microparticles. This may be effected by impregnating the microparticles with a solution of the catalyst in a solvent of the catalyst. Alternatively, the catalyst solution may be added to the suspension of polymer microparticles as produced and then isolating the microparticles by the procedures as hereinbefore discussed.

Secondly, the catalyst may be bound to the polymer microparticles by incorporating into the starting monomer mixture and then polymerizing the monomer mixture in the presence of the catalyst. Polymer microparticles of epoxy, melamine or alkyd resins bearing the catalyst may be produced by incorporating the catalyst into a liquid of said resin, emulsifying the liquid resin and spray drying.

The first and second methods are applicable to any conventional curing catalyst of appropriate base resins.

A further method comprises employing a monomer having appropriate catalyst activity as a portion of the starting monomer mixture and copolymerizing the mixture. For example, amine catalyst-bearing microparticles may be prepared copolymerizing a tertiary aminoalkyl acrylate or methacrylate. Metallic catalyst-bearing microparticles may be prepared by copolymerizing a metal-containing comonomer. Usable metal containing-comonomers include metal esters and metal salts of ethylenically unsaturated carboxylic acids such as acrylic acid, metacrylic acid, itaconic acid or maleic acid. Venyl or styryl metals may also be used. These metal esters and metal salts may contain a hydroxy, acyloxy or substituted or unsubstituted hydrocarbon residue attached to the metal atom. Examples of specific compounds include zinc mono(meth)acrylate, zinc di(meth)acrylate, tributyltin (meth)acrylate, dibutyltin di(meth)acrylate, dihydroxyaluminium (meth)acrylate, hydroxyaluminium di(meth)acrylate, (meth)acryloxyzirconium

octate, (meth)acryloxyzirconium laurate, isopropyl(meth)acryloyldiisostearoyl titanate, isopropyldi(meth)acryloylisostearoyl titanate, diphenyllead di(meth)acrylate and styryltriethyllead. These metal-containing monomers may be represented by one of the following formulas:

$$(CH{=}CH)_xM^nR_{n-x},$$

$$(CH{=}CHC_6H_4)_xM^nR_{n-x}, \text{ or}$$

$$(CH{=}CR'COO)_xM^nR_{n-x}$$

wherein M is a metal element; R is a hydrocarbon, acyl or hydroxyl group; R' is H or methyl; n is the valency of the metal element; and x is an integer smaller than n.

A still further method comprises reacting polymer microparticles having free or esterified carboxyl groups on their surfaces with a metal compound. Examples of metal compounds usable in the above esterification or transesterification reaction include oxides such as calcium oxide and zinc oxide; hydroxides such as tributyltin hydroxide, dibutyltin dihydroxide and aluminum hydroxide; and halides such as magnesium chloride, triethyltin chloride and tribenzyltin chloride. Alkali and alkaline earth metals such as sodium, potassium, calcium, magnesium, barium or strontium may be bound to carboxyl group-containing polymer microparticles through an ionic bond by reacting an appropriate metal hydroxide with the polymer microparticles.

Electrodeposition coating composition

The electrodeposition coating composition of this invention comprises, as essential components, the aforesaid electrically depositable base resin and the polymer microparticles. The proportion of the polymer microparticles ranges from 1 to 50% by weight of the total solid content of the composition. If this proportion is too low, the catalytic effect of polymer microparticles can not be expected. Conversely, excessive addition of the microparticles tend to affect the storage stability and workability of the composition of this invention.

The coating composition of this invention may contain an auxiliary curing agent such as melamine resin, benzoguanamine resin, phenol resin or polyester resin compounds.

These compounds are uniformly dispersed in an aqueous medium containing a base in case of the anodic electrodeposition or an acid in case of the cathodic electrodeposition in an amount sufficient to neutralize at least 20% of the base resin.

Examples of bases include ammonia, diethanolamine, triethanolamine, methylethanolamine, diethylamine, morpholine, and potassium hydroxide. Examples of acids include phosphoric acid, acetic acid, propionic acid and lactic acid.

The aqueous medium is water or a mixture of water and a water-miscible organic solvent such as ethylcellosolve, propylcellosolve, butylcellosolve, ethyleneglycol dimethyl ether, diacetone alcohol, 4-methoxy-4-methylpentanone-2 or methyl ethyl ketone. A small amount of a water-imiscible organic solvent such as xylene, toluene, methyl isobutyl ketone or 2-ethylhexanol may be added to the mixture of water and the water-miscible organic solvent.

The electrodeposition coating composition of this invention may further contain conventional pigments such as titanium dioxide, ferric oxide, carbon black, aluminum silicate, precipitated barium sulfate, aluminum phosphomolybdate, strontium chromate, basic lead silicate or lead chromate.

The electrodeposition coating composition of this invention may be applied on a conductive substrate by the electrodeposition coating process at a nonvolatile content of 10 to 20% by weight to a dry film thickness of 15 to 30 microns (μm). After applying, the resulting coating film may be cured at an elevated temperature of 100°C to 180°C.

The invention is further illustrated by the following examples in which all parts and percents are by weight unless otherwise specified.

Production Example 1

To a two liter flask having stirring means, a reflux condenser, temperature-control means, a nitrogen gas-introducing tube and a decanter were added 134 parts of N,N-bis(hydroxyethyl)taurine, 130 parts of neopentyl glycol, 236 parts of azelaic acid, 186 parts of phthalic anhydride, and 27 parts of xylene. The mixture was refluxed and water was removed as an azeotropic mixture with xylene. The temperature was raised to 190°C over 2 hours and the reaction was continued with stirring until an acid number of 145 was reached.

16 parts of the above amphoionic group-containing polyester resin were dissolved in 104 parts of deionized water containing 1.6 parts of dimethylethanolamine. To this solution was added dropwise a monomer mixture consisting of 14 parts of methyl methacrylate, 28 parts of n-butyl acrylate, 18 parts of

allyl methacrylate and 60 parts of 1,6-hexanediol dimethacrylate dropwise with stirring to obtain a pre-emulsified monomer mixture.

To a flask containing 330 parts of deionized water pre-heated at 80°C was added dropwise a solution of 1.6 parts of azobiscyanovaleric acid and 1.1 parts of dimethylethanolamine in 40 parts of deionized water over 50 minutes. Five minutes after the initiation of the addition of this solution, addition of the above pre-emulsified mixture was started and continued for 35 minutes. The resulting reaction mixture was allowed to stand for 30 minutes at the same temperature. Then a solution of 1 part of azobiscyanovaleric acid and 0.7 parts of dimethylethanolamine in 30 parts of deionized water was added dropwise over 45 minutes. Five minutes later than the initiation of the addition of this solution, addition of a monomer mixture consisting of 28 parts of styrene, 16 parts of methyl methacrylate, 33 parts of n-butyl methacrylate, 3 parts of methacrylic acid and 3.2 parts of dimethylethanol amine was started and continued for 30 minutes. Then the reaction mixture was allowed to stand for 60 minutes at the same temperature to complete the reaction.

The resulting polymer suspension was freeze dried. Then 60 parts of polymer particles were placed in a round flask and and 180 parts of xylene were added thereto at 70°C to disperse polymer particles therein. 4.3 parts of dibutyltin oxide were added to the dispersion and stirring was continued while distilling off remaining water for about 20 minutes. After xylene was removed in vacuo, the residue was milled to an average particle size of 10 microns. The tin content of the resulting powder measured by X-ray fluorometry was 8500 ppm.

### Production Example 2

To the same flask as used in Production Example 1 were placed 100 parts of ethyleneglycol monomethyl ether. Two drip funnels were mounted to the flask. A solution of 75 parts of N-methyl-N-(vinylbenzyl) taurine in 100 parts of ethyleneglycol monomethyl ether containing a small amount of dimethylethanolamine was placed into one funnel. A monomer mixture consisting of 50 parts of 2-hydroxyethyl acrylate, 10 parts of acrylic acid, 110 parts of methyl methacrylate, 110 parts of styrene and 145 parts of n-butyl acrylate was placed into the other funnel. A mixture of 10 parts laurylmercaptan and 10 parts of azobisbutyronitrile was dissolved in the monomer mixture.

The contents of two funnels were then added dropwise to the flask at 100°C over 120 minutes. After the addition, the mixture was stirred at 100°C for 60 minutes and evaporated in a rotary evaporator to remove the solvent. An acrylic resin having a solid content of 96% and a number average molecular weight of 4500 was obtained.

40 parts of the above acrylic resin were dissolved in 160 parts of deionized water containing 4 parts of dimethylethanolamine. To this solution was added dropwise a monomer mixture consisting of 30 parts of methyl methacrylate, n-butyl acrylate, 14 parts of monobutyl maleate/glycidyl methacrylate adduct and 56 parts of ethylene glycol dimethacrylate to prepare a pre-emulsified monomer mixture.

To a flask containing 330 parts of deionized water preheated at 80°C was added dropwise a solution of 2 parts of azobiscyanovaleric acid and 1.3 parts of dimethylethanolamine in 40 parts of deionized water for 65 minutes. Ten minutes after starting the addition, the above pre-emulsified monomer mixture was began to drop over 45 minutes. After the completion of the addition of azobiscyanovaleric acid, the reaction mixture was allowed to stand for 20 minutes at the same temperature. Then a solution of 0.8 parts of azobiscyanovaleric acid and 0.6 parts of dimethylethanolamine in 20 parts of deionized water was added dropwise over 40 minutes. Concurrently, a monomer mixture consisting of 18 parts of styrene, 8 parts of ethyl methacrylate, 23 parts of n-butyl methacrylate, 10 parts of 2-hydroxyethyl methacrylate and 1 part of methacryloxyzirconium octate was began to drop 10 minutes after the initiation of addition of azobiscyanovaleric acid. Addition of this mixture was continued for 20 minutes. The reaction was allowed to stand for 90 minutes at the same temperature to complete the reaction. A dispersion of polymer microparticles having a particle size of 1200 nm was obtained.

### Production Example 3

12 parts of the amphoionic polyester resin prepared in Production Example 1 were dissolved in 104 parts of deionized water containing 1.2 parts of dimethylethanolamine. To the solution was added a monomer mixture consisting of 66 parts of methyl methacrylate, 60 parts of n-butyl acrylate, 14 parts of allyl methacrylate and 40 parts of ethylene glycol dimethacrylate dropwise with stirring to obtain a pre-emulsified monomer mixture.

To a flask containing 330 parts of deionized water pre-heated at 80°C was added dropwise a solution of 2 parts of azobiscyanovaleric acid and 1.3 parts of dimethylethanolamine in 40 parts of deionized water over 80 minutes. Ten minutes after the initiation of the addition, the above pre-emulsified monomer mixture was began to drop over 60 minutes. After the completion of addition of azobiscyanovaleric acid, the reaction mixture was allowed to stand for 30 minutes at the same temperature. Then a monomer mixture consisting of 12 parts of styrene, 2 parts of methyl methacrylate, 4 parts of n-butyl methacrylate and 2 parts of zinc monomethacrylate was added dropwise over 20 minutes. Concurrently, a solution of 0.8 parts of azobiscyanovaleric acid in 20 parts of deionized water containing 0.6 parts of dimethylethanolamine was added dropwise. After the addition, the mixture was allowed to stand for one hour to complete the reaction. A dispersion of polymer microparticles having a particle size of 150 nm was obtained.

Production Example 4

The process of Production Example 1 was followed except that 4.2 parts of diethylaluminum chloride were replaced for 4.3 parts of dibutyltin oxide. The resulting resin powder contained aluminum at a concentration of 3800 ppm when measured by X-ray fluorometry.

Production Example 5

To a two liter flask having stirring means, a reflux condenser, temperature-controlling means, nitrogen gas-introducing tube and decanter were added 73.5 parts of sodium taurinate, 100 parts of ethylene glycol, and 200 parts of ethylene glycol monomethyl ether. The temperature was raised to 120°C with stirring to give a uniform solution. To the solution was added with stirring a solution of 470 parts of EPIKOTE 1001 (Shell Chemical Company, bisphenol A diglycidyl ether epoxy resin having an epoxy equivalent of 470) in 400 parts of ethylene glycol monomethyl ether over 2 hours. The mixture was stirred at the same temperature for additional 20 hours to give 518 parts of modified epoxy resin. The resin had an acid number of 49.4 (KOH titration) and a sulfur content of 2.8% (X-ray fluorometry).

To a one liter flask equipped with stirring means, cooling means and temperature-control means were added 380 parts of deionized water, 50 parts of the modified epoxy resin as prepared above and 7 parts of dimethylethanolamine. The mixture was stirred at 80°C to make a solution. To the solution was added a solution of 2.5 parts of azobiscyanovaleric acid in 50 parts of deionized water containing 1.6 parts of dimethylethanolamine. Then a mixture consisting of 200 parts of styrene, 50 parts of ethylene glycol dimethylacrylate and 12.5 parts of a solution of cobalt naphthenate (in xylene, 20% nonvolatile) was added dropwise over 90 minutes. The mixture was stirred for additional 90 minutes to give an aqueous dispersion of polymer microparticles having a nonvolatile content of 40.8% and a pH of 9.8.

The dispersion was spray dried to obtain a polymer powder having an average particle size of 3 microns.

Production Example 6

15 parts of the modified epoxy resin produced in Production Example 5 and 230 parts of deionized water were placed in a flask and heated at 70°C. To this was added a solution of 1 part of 2,2'-azobis(2-amidinopropane)-2-acetic acid in 30 parts of deionized water. Then a monomer mixture consisting of 28 parts of styrene, 20 parts of methyl methacrylate, 20 parts of n-butyl acrylate, 10 parts of ethylene glycol dimethacrylate, 15 parts of tributyltin methacrylate and 5 parts of dimethylethanolamine were added dropwise over 60 minutes. After the addition, a solution of 0.5 parts of 2,2'-azobis(2-amidinopropane)-2-acetic acid in 10 parts of deionized water was added. The mixture was stirred for additional 120 minutes to give an emulsion having a nonvolatil content of 30%. The particle size of polymer microparticle was 54 nm.

Example 1

Anodic electrodeposition coating composition

Part 1.

| | |
|---|---|
| NISSEKI polybutadiene B—1500 1) | 1000 g |
| ANTIGEN 6C 2) | 10 g |
| Maleic anhydride | 250 g |
| Diethylamine | 0.5 g |
| Deionized water | 20 g |
| Propylene glycol | 100 g |
| Ethylcellosolve | 340 g |

1) Nippon Petrochemical Co., Ltd., 1,2-vinyl=65%, trans=14%, cis=16%, $\overline{Mn}$=1500.

2) Sumitomo Chemical Co., Ltd., N-methyl-N'-(1,3-dimethylbutyl)-p-phenylenediamine.

A 2 liter flask equipped with a reflux condenser was charged with liquid polybutadiene, maleic anhydride and ANTIGEN 6C. The mixture was reacted at 190—200°C for about 5 hours. The completion of reaction was indicated by a color reaction test with dimethylaniline.

After the reaction mixture was cooled to 100°C, a mixture of deionized water and diethylamine was dripped over 30 minutes. Stirring was continued for about 1 hour until an acid number of 140 was reached. Thereafter, propylene glycol was reacted at 110°C for 3 hours until an acid number of 125 was reached.

After adding ethylcellosolve, the mixture was stirred at 80°C for about 1 hour to give a nonvolatile content of 80%.

Part 2.

| | |
|---|---|
| EPOTOTO YD—014 [3)] | 950 g |
| Ethylcellosolve® | 240 g |
| Hydroquinone | 10 g |
| Acrylic acid | 65 g |
| Dimethyl benzylamine | 5 g |

3) Toto Kasei Co., Ltd., epoxy resin, epoxy equivalent=950.

A 2 liter flask equipped with a reflux condenser was charged with EPOTOTO YD—014 and ethylcellosolve. The temperature was gradually raised to 120°C with stirring to make a solution. To the solution were added hydroquinone, acrylic acid and dimethyl benzylamine. The mixture was allowed to react at 120°C for 4 hours until an acid number less than 1 was reached. Nonvolatile content was 80%.

Part 3.

125 parts of the varnish of Part 1, 75 parts of the varnish of Part 2, 40 parts of butylated methylolmelamine (50% nonvolatile), 40 parts of resol type phenolic resin (50% nonvolatile) and 2 parts of nonionic surfactant were thoroughly mixed. To the mixture were added 13 parts of triethylamine and 707 parts of deionized water with stirring. Then 60 parts of the dispersion of Product Example 2 were incorporated to the mixture. A coating composition having a solid content of about 20% and a polymer microparticle content of about 2% was obtained.

The above composition was deposited electrically on a zinc phosphate-treated steel plate used as anode. The coated plate was then rinsed with water and baked at 140°C for 30 minutes to give a cured film having a thickness of about 20 microns (μm). The resulting coating film was tested for its properties. The results are shown in Table I.

Example 2

The process of Example 1 was followed except that 60 parts of the polymer microparticle dispersion produced in Production Example 3 were replaced for the polymer microparticle dispersion of Production Example 2.

Example 3

Pigment paste

125 parts of the varnish of Part 1 of Example 1 were neutralized with 13 parts of triethylamine and then diluted with 250 parts of deionized water to a nonvolatile content of 26%. Then 150 parts of titanium dioxide, 50 parts of lead silicate, 25 parts of strontium chromate, 25 parts of carbon black, 125 parts of polymer microparticle powder of Production Example 1 and 100 parts of deionized water were added. The mixture was stirred in a disperser for about 1 hour. After adding an amount of glass beads, the mixture was thoroughly dispersed in a sand mill to a particle size less than 20 microns and filtered to remove the glass beads. A pigment paste having a nonvolatile content of 55% was produced.

Electrodeposition enamel

125 parts of the varnish of Part 1 of Example 1, 75 parts of the varnish of Part 2 of Example 1, 40 parts of butylated methylolmelamine (50% nonvolatile), 40 parts of resol type phenolic resin (50% nonvolatile) and 2 parts of nonionic surfactant were thoroughly mixed. To the mixture were added 13 parts of triethylamine and 707 parts of deionized water with stirring. Then 125 parts of the above pigment paste and 296 parts of deionized water were added to the mixture. An electrodeposition coating enamel having a polymer microparticle content of about 2% was prepared.

This composition was deposited electrically and baked as in Example 1. The properties of the resulting coating film are as shown in Table I.

Example 4

Part 1.

NISSEKI polybutadiene B—2000 ($\overline{MN}$=2,000, 1,2-vinyl=65%) was epoxidized with peracetic acid to obtain an epoxidized polybutadiene having an oxirane oxygen content of 6.4%.

1,000 g of the epoxidized polybutadiene, 354 g of ethylcellosolve and 62.1 g of dimethylamine were reacted in a 2 liter autoclave at 150°C for 5 hours. After unreacted dimethylamine was distilled off the residue was cooled to 120°C. A mixture of 79.3 g of acrylic acid, 7.6 g of hydroquinone and 26.4 g of

ethylcellosolve was added to the residue and reacted therewith at 120°C for 3¾ hours.

A cationic resin varnish (A) having an amine number of 85.2 millimoles/100 g, an acid number of 100 millimoles/100 g, and a solid content of 75.0% was obtained.

Part 2.

1,000 g of bisphenol A epoxy resin (EPIKOTE 1004, epoxy equivalent=950, Yuka Shell Epoxy Co., Ltd.) was dissolved in 343 g of ethylcellosolve. To the solution was added a mixture of 76.3 g of acrylic acid, 10 g of hydroquinone and 5 g of N,N-dimethylaminoethanol. The mixture was reacted at 100°C for 5 hours to obtain a solution of epoxy acrylate resin (B) having a solid content of 75%.

Part 3.

1,000 g of NISSEKI polybutadiene B—1000 ($\overline{MN}$=1,000, 1,2-vinyl=60%), 265.8 g of maleic anhydride, 1 g of ANTIGEN 6C (Sumitomo Chemical Industry Co., Ltd.) and 10 g of xylene were added to a 2 liter separable flask having a reflux condenser attached thereto. The mixture was reacted at 190°C for 5 hours under nitrogen gas current. Unreacted maleic anhydride and xylene were distilled off in vacuo to obtain malleinized polybutadiene having an acid number of 214 millimoles/100 g.

1,000 g of the maleinized polybutadiene was reacted with 212.4 g of ethylcellosolve at 120°C for 2 hours to open the acid anhydride ring. A half ester of maleinized polybutadiene (C) having a solid content of 98% was obtained.

Cathodic electrodeposition composition

400 parts of the cationic resin solution (A), 240 parts of the resin solution (B) and 19.2 parts of the resin solution (C) were thoroughly mixed. The mixture was neutralized with 8.1 parts of acetic acid. To the mixture were added 30 parts of the powder of Production Example 4. The mixture was dispersed well and then gradually diluted with 1,950 parts of deionized water. This gave a cathodic electrodeposition coating composition having a solid content of about 20% and a polymer microparticle content of about 2%.

This composition was deposited electrically on a zinc phosphate-treated steel plate used as cathode. The coated plate was then rinsed with water and baked at 160°C for 30 minutes to give a cured film having a thickness of about 20 microns. Properties of the film are shown in Table I.

## Example 5

Quaternary ammonium group-containing resin

| | |
|---|---|
| Epoxydized polybutadiene, E 1800—6.5 (NIpon Petrochemical Co., Ltd.) | 1000 g |
| Butylcellosolve® | 349 g |
| Dimethylamine | 46 g |
| 50% Lactic acid | 138 g |
| Deionized water | 473 g |
| Phenyl glycidyl ether | 117 g |

An autoclave was charged with epoxidized polybutadiene E 1800—6.5, butylcellosolve® and dimethylamine. The mixture was reacted at 150°C for 5 hours. After unreacted dimethylamine was distilled off, the product was cooled to 60°C, diluted with a mixture of 50% lactic acid and deionized water, and then stirred at 80°C for 30 minutes. Then phenyl glycidyl ether was added and the temperature was raised to 110°C. The reaction was continued at the same temperature with stirring until the acid number of the

reaction product was less than 0.1 when titrating with alcoholic potassium hydroxide using phenolphthalain indicator. A solution of cationic resin having a nonvolatile content of 55% was obtained.

Pigment paste

| | |
|---|---|
| Quaternized resin solution | 231 Parts |
| Deionized water | 476 " |
| Polymer microparticles of Production Ex. 5 | 196 " |
| Carbon black | 16 " |
| Titanium dioxide | 92 " |
| Kaolin | 220 " |
| Basic lead siliate | 58 " |

The quartinized resin solution was dissolved in deionized water. To the solution was added the polymer microparticles of Production Example 5, pigments and an amount of glass beads. The mixture was thoroughly dispersed in a sand mill to a particle size less than 20 microns (μm) and filtered to remove glass beads. A pigment paste having a nonvolatile content of 55% was produced.

Cathodic electrodeposition enamel

400 parts of the cationic resin solution (A) of Example 4, 240 parts of the resin solution (B) of Example 4 and 19.2 parts of the resin solution (C) of Example 4 were thoroughly mixed. The mixture was neutralized with 8.1 parts of acetic acid. To the mixture were added 512 parts of the above pigment paste and 896 parts of deionized water. A cathodic electrodeposition enamel having a polymer microparticle content of about 2% was obtained.

Electrodeposition coating was carried out using the above enamel in the same way as Example 4. Properties of the resulting coating film are shown in Table I.

Comparative Example 1

Example 1 was followed except that 60 parts of the polymer microparticle dispersion of Production Example 2 were not added.

Comparative Example 2

Example 3 was followed except that the pigment paste did not contain 125 parts of polymer microparticles of Production Example 1 and 100 parts of deionized water. The amounts of pigment paste and deionized water to be added to the enamel were decreased to 125 parts and 220 parts, respectively.

Comparative Example 3

Example 4 was followed except that 30 parts of polymer microparticles of Production Example 4 were not added and the amount of deionized water was decreased to 1,770 parts.

Comparative Example 4

Example 5 was followed except that the pigment paste did not contain 196 parts of polymer microparticles of Production Example 5 and the amount of deionized water to be added to the pigment paste was changed to 383 parts. The amounts of pigment and deionized water to be added to the enamel were decreased to 360 parts and 630 parts, respectively.

Table I

| | Example | | | | | Comparative Example | | | |
|---|---|---|---|---|---|---|---|---|---|
| | 1 | 2 | 3 | 4 | 5 | 1 | 2 | 3 | 4 |
| Pencil hardness | HB | HB | F | F | H | 2B | HB | B | HB |
| Anti-rubbing test [1)] | ○ | ○ | ○ | ○ | ◎ | × | △ | × | △ |
| Salt spray test [2)] | | | | | | | | | |
| 240 hours | ○ | ○ | ○ | — | — | × | △ | — | — |
| 480 hours | — | — | — | ○ | ○ | — | — | × | △ |

Remarks

1) Sample film was rubbed with a gauze fabric impregnated with MIBK at 20 reciprocations. Changes in the film appearance were visually observed.

◎ No change; ○ Diminish gloss but no dissolution;

△ Diminished gloss and dissolution; × Substrate exposure

2) A 5% saline was sprayed. Evaluation was made by one half of the maximum width of peeling when pulled by an adhesive tape along scratched line.

○ less than 3mm; △ 3-5 mm; × greater than 5 mm.

Example 6

970 parts EPON 1001 (epoxy resin, sold by Shell Chemical Company, epoxy equivalent 485) and 265 parts of polycaprolactone diol (sold under the name of PCP 0200 by Union Carbide Corporation, M.W. about 543) were placed in a suitable reactor and heated to 100°C in a nitrogen gas atmosphere. 0.46 parts of dimethylbenzylamine were added to the mixture and allowed to react at 130°C for 1.5 hours. Then the reaction mixture was cooled to 110°C. To this were added 110 parts of methyl isobutyl ketone, 39.8 parts of a 73% solution of diethylenetriamine methyl isobutyl ketimine in methyl isobutyl ketone, and 100 parts of methyl isobutyl ketone. Then the mixture was cooled to 70°C. After adding 53.1 parts of diethylamine, the mixture was heated at 120°C for 3 hours to complete the reaction. The resulting solution referred to as "First Liquid" has a nonvolatile content of 75%.

Using a separate reactor, 291 parts of toluenediisocyanate (mixing of 2,4- and 2,6-isomers at a ratio of 80:20) were reacted with 218 parts of 2-ethylhexanol for 0.5 hours in a nitrogen atmosphere with stirring at 38°C while cooling externally. The reaction mixture was then heated to 60°C. To this were added 75 parts of trimethylolpropane and 0.08 parts of dibutyltin dilaurate. The mixture was allowed to react for 1.5 hours at 121°C until substantially all isocyanato function disappeared when confirmed IR spectrometrically. This reaction product was diluted with 249 parts of ethyleneglycol monomethyl ether to give a solution referred to as "Second Liquid" having a nonvolatile content of 70%.

576 parts of First Liquid, 217 parts of Second Liquid, and 12.3 parts of glacial acetic acid were thoroughly mixed. After diluting the mixture with 705.5 parts of deionized water, 39 parts of ethyleneglycol monohexyl ether, 1,880 parts of deionized water and 213 parts of the dispersion of Production Example 6 were added thereto. A cathodic electrodeposition coating composition having a solid content of about 20% and a polymer microparticle content of about 2% was prepared.

This composition was deposited on a zinc phosphate-treated steel plate. Then the coated substrate was rinsed with water, and baked at 160°C for 30 minutes to give a film having a thickness of 20 microns.

Film properties are shown in Table II.

Example 7

Part 1. Quarternizing agent

| Ingredient | Parts | Solid |
|---|---|---|
| Second Liquid of Example 6 | 320.0 | 224.0 |
| Dimethylethanolamine | 87.2 | 87.2 |
| 75% Lactic acid | 117.6 | 88.2 |
| Butylcellosolve® | 39.2 | — |

Second Liquid prepared in Example 6 and of dimethylethanolamine were reacted in a suitable reactor exothermally at 80°C for 1 hour with stirring. Then 75% aqueous solution of lactic acid and butylcellosolve® were added thereto. The mixture was stirred at 65°C for additional 30 minutes to give a quaternizing agent.

Part 2. Vehicle

| Ingredient | Parts | Solid |
|---|---|---|
| EPON 829 | 710.0 | 681.2 |
| Bisphenol A | 289.6 | 289.6 |
| Second Liquid of Example 6 | 406.4 | 386.1 |
| Quarternizing agent of Part 1 | 49.3 | 421.9 |
| Deionized water | 71.2 | — |
| Butylcellosolve | 56.76 | — |

Using a separate reactor, EPON 829 (reaction product of epichlorhydrine and bisphenol, sold by Shell Chemical Company, epoxy equivalent about 193) and bisphenol A were reacted exothermally in a nitrogen gas atmosphere at 150—160°C for 1 hour. Then the reaction mixture was cooled to 120°C. Second Liquid of Example 6 was added thereto and allowed to react at 110—120°C for about 1 hour. After cooling to 85—95°C, the reaction mixture was diluted with butycellosolve and 71.2 parts of deionized water. The quaternizing agent of Part 1 was added and allowed to react at 80—85°C until an acid number 1 was reached.

Part 3. Cathodic electrodeposition enamel

A pigment paste was prepared according to the following formulation.

| Ingredient | Parts | Solid |
|---|---|---|
| Vehicle of Part 2 | 1024.0 | 717.5 |
| Butylcellosolve® | 241.0 | — |
| Deionized water | 1112.0 | — |
| Kaolin | 1666.0 | 1666.0 |
| Lead silicate | 204.4 | 204.4 |
| Polymer microparticle of Production Example 1 | 1098.0 | 1098.0 |
| Deionized water | 1357.0 | — |

1,024 parts of the resulting vehicle was diluted to a solid content of 30% with 241 parts of butylcellosolve® and 1,122 parts of deionized water. To this were added 1,666 parts of kaolin and 204.4 parts of lead silicate and 1,098 parts of polymer microparticles. After mixing for 1 hour in a disperser, an amount of glass beads was added to the mixture. Then the mixture was dispersed in a sand mill to a particle size of less than 20 microns and filtered to remove glass beads. A pigment paste having a solid content of 55% was prepared.

A mixture of 576 parts of First Liquid of Example 6 and 217 parts of Second Liquid of Example 6 was neutralized with 12.3 parts of glacial acetic acid and diluted with 705.5 parts of deionized water. After adding 39 parts of ethyleneglycol monohexyl ether and 1,880 parts of deionized water, 512 parts of the above pigment paste and 896 parts of deionized water were mixed to give a cathodic electrodeposition enamel having a polymer microparticle content of about 2%.

This composition was deposited electrically on a zinc phosphate-treated steel plate. Then the coated substrate was rinsed with water, and baked at 160°C for 30 minutes. Film properties are shown in Table II. Film thickness was 20 microns (μm).

Comparative Example 5

Example 6 was followed except that 213 parts of polymer microparticles of Production Example 6 were not added.

Comparative Example 6

Example 7 was followed except that 896 parts of deionized water and 512 parts of the pigment paste were replaced by 630 parts of deionized water and 360 parts of the following pigment paste.

| Ingredient | Parts | Solid |
|---|---|---|
| Vehicle of Part 2 of Example 7 | 1024.0 | 717.5 |
| Butylcellosolve® | 241.0 | — |
| Deionized water | 1112.0 | — |
| Kaolin | 1666.0 | 1666.0 |
| Lead silicate | 204.4 | 204.4 |
| Deionized water | 460.0 | — |

Table II

| | Example | | Comparative Example | |
|---|---|---|---|---|
| | 6 | 7 | 5 | 6 |
| Pencil hardness | HB | H | 3B | B |
| Anti-rubbing test 1) | ○ | ◎ | × | × |
| Salt spray test 2) 480 hrs. | ○ | ○ | × | △ |

Remarks

1) and 2) are the same as Table I.

**Claims**

1. An electrodeposition coating composition comprising
(a) an aqueous dispersion of an electrically depositable, film-forming base resin selected from the group consisting of an oxidation polymerizing resin and a combination of an active hydrogen-containing resin and a blocked polyisocyanate compound; and
(b) polymer microparticles carrying on their surfaces a catalytically effective amount of a metal compound or a tertiary amine capable of catalyzing the curing reaction of said resins, said polymer microparticles being uniformly dispersed in said aqueous dispersion of said film-forming resin.

2. The electrodeposition coating composition of Claim 1, wherein said film-forming resin is an oxidation polymerizing resin, and wherein said metal compound contains Mn, Co, Cu, Fe, Pb, Zn, Zr, Li, Mg, Al, Ba, Sr, Ni, Ca, Na K or Sn.

3. The electrodeposition coating composition of Claim 1, wherein said film-forming resin is a combination of an active hydrogen-containing resin and a blocked polyisocyanate compound, and wherein said metal compound contains Sn, Bi, Ti or Ca.

4. The electrodeposition coating composition of Claim 1, wherein said polymer microparticles have a particle size of 0.01 to 20 microns (μm).

5. The electrodeposition coating composition of Claim 1, wherein said polymer microparticles are made of an internally cross-linked polymer of a mixture of ethylenically unsaturated monomers.

6. The electrodeposition coating composition of Claim 1, wherein said polymer microparticles are present in a proportion of 1 to 50% by weight of the solid content of said film-forming resin.

7. The electrodeposition coating composition of Claim 1, wherein said metal compound or tertiary amine is bound to said polymer microparticles by impregnating said polymer microparticles with a solution thereof.

8. The electrodeposition coating composition of Claim 5, wherein said metal compound or tertiary amine is bound to said polymer microparticles by adding said metal compound or said tertiary amine to said monomer mixture and polymerizing said monomer mixture.

9. The electrodeposition coating composition of Claim 8, wherein said metal compound or tertiary amine has an ethylenically unsaturated group capable of copolymerizing with said monomer mixture.

10. The electrodeposition coating composition of Claim 9, wherein said ethylenically unsaturated group is vinyl, styryl, acryloyl or methacryloyl.

**Patentansprüche**

1. Elektroabscheidbare Überzugszusammensetzung umfassend:
(a) eine wässrige Dispersion eines elektrisch abscheidbaren filmbildenden Basisharzes, ausgewählt aus einer Gruppe bestehend aus einem oxidationspolymerisierenden Harz und einer Kombination aus einem aktive Wasserstoffatome enthaltenden Harz und einer blockierten Polyisocyanatverbindung; und
(b) Polymermikropartikel, deren Oberflächen eine katalytisch wirksame Menge einer Metallverbindung oder eines tertiären Amins aufweisen, die in der Lage ist das Härten der Harze zu katalysieren, wobei die Polymermikropartikel einheitlich in der wässrigen Dispersion des filmbildenden Harzes dispergiert sind.

2. Elektroabscheidbare Überzugszusammensetzung nach Anspruch 1, wobei das filmbildende Harz ein oxidationspolymerisierendes Harz ist und die Metallverbindung Mn, Co, Cu, Fe, Pb, Zn, Zr, Li, Mg, Al, Ba, Sr, Ni, Ca, Na, K oder Sn enthält.

3. Elektroabscheidbare Überzugszusammensetzung nach Anspruch 1, wobei das filmbildende Harz eine Kombination aus einem aktive Wasserstoffatome enthaltenden Harz und einer blockierten Polyisocyanatverbindung ist und die Metallverbindung Sn, Bi, Ti oder Ca enthält.

4. Elektroabscheidbare Überzugszusammensetzung nach Anspruch 1, worin die Polymermikropartikel eine Partikelgröße von 0.01 bis 20 Miktron (µm) aufweisen.

5. Elektroabscheidbare Überzugszusammensetzung nach Anspruch 1, worin die Polymermikropartikel aus einem intern vernetzten Polymer, aus einer Mischung von ethylenisch ungesättigten Monomeren, hergestellt sind.

6. Elektroabscheidbare Überzugszusammensetzung nach Anspruch 1, worin die Polymermikropartikel in einem Verhältnis von 1 bis 50 Gew.% der festen Bestandteile des filmbildenden Harzes, vorhanden sind.

7. Elektroabscheidbare Überzugszusammensetzung nach Anspruch 1, worin die Metallverbindung oder das tertiäre Amin durch Imprägnieren der Polymermikropartikel mit einer Lösung davon, an die Polymermikropartikel gebunden sind.

8. Elektroabscheidbare Überzugszusammensetzung nach Anspruch 5, worin die Metallverbindung oder das tertiäre Amin an die Polymermikropartikel gebunden sind, durch Zusatz der Metallverbindung oder des tertiären Amins zu der Monomermischung und Polymerisation der Monomermischung.

9. Elektroabscheidbare Überzugszusammensetzung nach Anspruch 8, worin die Metallverbindung oder das tertiäre Amin eine ethylenisch ungesättigte Gruppe aufweist, die in der Lage ist, mit der Monomermischung eine Copolymerisation einzugehen.

10. Elektroabscheidbare Überzugszusammensetzung nach Anspruch 9, worin die ethylenisch ungesättigte Gruppe Vinyl, Styryl, Acryloyl oder Methacryloyl ist.

**Revendications**

1. Composition de revêtement électrodéposable, comprenant:

(a) une dispersion aqueuse d'une résine de base filmogène, déposable électriquement, choisie parmi une résine de polymérisation par oxydation et une association d'une résine contenant des atomes d'hydrogène actifs et un polyisocyanate bloqué; et

(b) des microparticules de polymère portant sur leurs surfaces une quantité catalytiquement efficace d'un composé métallique ou d'une amine tertiaire capable de catalyser la réaction de durcissement de ces résines, ces microparticules de polymère étant uniformément dispersées dans cette dispersion aqueuse de cette résine filmogène.

2. Composition de revêtement électrodéposable de la revendication 1, dans laquelle cette résine filmogène est une résine de polymérisation par oxydation, et dans laquelle ce composé métallique contient Mn, Co, Cu, Fe, Pb, Zn, Zr, Li, Mg, Al, Ba, Sr, Ni, Ca, Na, K ou Sn.

3. Composition de revêtement électrodéposable de la revendication 1, dans laquelle cette résine filmogène est une association d'une résine contenant des atomes d'hydrogène actifs et un polyisocyanate bloqué, et dans laquelle ce composé métallique contient Sn, Bi, Ti ou Ca.

4. Composition de revêtement électrodéposable de la revendication 1, dans laquelle ces microparticules de polymère ont une taille de particule de 0,01 à 20 micromètres (µm).

5. Composition de revêtement électrodéposable de la revendication 1, dans laquelle ces microparticules de polymère sont constituées d'un polymère réticulé intérieurement d'un mélange de monomères à insaturation éthylénique.

6. Composition de revêtement électrodéposable de la revendication 1, dans laquelle ces microparticules de polymères sont présentes dans une proportion de 1 à 50% en poids de la teneur en matière solide de cette résine filmogène.

7. Composition de revêtement électrodéposable de la revendication 1, dans laquelle ce composé métallique ou cette amine tertiaire sont liés à ces microparticules de polymère par imprégnation de ces microparticules de polymère avec une solution de ceux-ci.

8. Composition de revêtement électrodéposable de la revendication 5, dans laquelle ce composé métallique ou cette amine tertiaire sont liés à ces microparticules de polymère en ajoutant ce composé métallique ou de cette amine tertiaire à ce mélange de monomères et en polymérisant ce mélange de monomères.

9. Composition de revêtement électrodéposable de la revendication 8, dans laquelle ce composé métallique ou cette amine tertiaire possède un groupe à insaturation éthylénique capable de se copolymériser avec ce mélange de monomères.

10. Composition de revêtement électrodéposable de la revendication 9, dans laquelle ce groupe à insaturation éthylénique est un groupe vinyle, styryle, acryloyle ou méthacryloyle.